# EUROPÄISCHE PATENTSCHRIFT

(11) **EP 3 883 797 B1**
(45) Veröffentlichungstag und Bekanntmachung des Hinweises auf die Patenterteilung: **02.11.2022**
(21) Anmeldenummer: 19805638.4
(22) Anmeldetag: 15.11.2019
(51) Int. Cl.: B60H 1/24, B60H 1/00, B60R 13/02, B60H 1/34

(54) **DACHHIMMELVERKLEIDUNG SOWIE VERFAHREN ZUR HERSTELLUNG EINER DACHHIMMELVERKLEIDUNG**
HEADLINER TRIM AND METHOD FOR PRODUCING A HEADLINER TRIM
GARNITURE DE TOIT ET PROCÉDÉ DE FABRICATION D'UNE GARNITURE DE TOIT

(30) Priorität: 19.11.2018 DE 102018129059
(43) Veröffentlichungstag der Anmeldung: 29.09.2021
(73) Patentinhaber: Kautex Textron GmbH & Co. KG, 53229 Bonn (DE)
(72) Erfinder: BOUFFIER, Roman, 53639 Königswinter (DE); WOLF, Hartmut, 53639 Königswinter (DE)
(74) Vertreter: Richly & Ritschel Patentanwälte PartG mbB
(86) Internationale Anmeldenummer: PCT/EP2019/081520
(87) Internationale Veröffentlichungsnummer: WO 2020/104332

(56) Entgegenhaltungen:
- DE-A1-102009 017 758
- DE-T2- 60 111 114
- DE-U1- 29 706 751
- US-A1- 2011 056 584
- US-B1- 6 203 092

## Beschreibung

Die Erfindung betrifft eine Dachhimmelverkleidung für ein Kraftfahrzeug. Ferner betrifft die Erfindung ein Verfahren zur Herstellung einer Dachhimmelverkleidung für ein Kraftfahrzeug.

Eine beispielhafte Verkleidung mit integrierten Luftkanälen wird in dem Dokument DE 601 11 114 T2 offenbart.

Eine Dachhimmelverkleidung wird üblicherweise an einem Teil der Karosserie eines Kraftfahrzeugs angeordnet, welche einen Dachhimmel ausbildet. Dachhimmelverkleidungen sind üblicherweise aus mehreren Lagen unterschiedlicher Materialien ausgebildet, so dass die Dachhimmelverkleidungen aus einem Mehrschichtverbund ausgebildet sind. Diese Mehrschichtverbunde sind zum einen aufwendig in mehreren Prozessschritten herzustellen. Zudem sind derartige Mehrschichtverbunde aufgrund ihrer unterschiedlichsten Arten von Materialien meist nicht recycelbar. Soll zudem eine Belüftung des Innenraums des Kraftfahrzeugs über den Dachhimmel erfolgen, so ist eine Integration der dafür notwendigen Luftkanäle und Luftaustrittsöffnungen nur in aufwendiger Art und Weise möglich, da die Luftkanäle und Luftaustrittsöffnungen in Form von separaten Bauteilen in den Mehrschichtverbund integriert werden müssen oder außerhalb der Dachhimmelverkleidung angeordnet werden müssen. Da diese separaten Bauteile für die Fahrzeuginsassen meist sichtbar sind, werden sie zudem von den Fahrzeuginsassen als störend empfunden.

Der Erfindung liegt damit die Aufgabe zugrunde, eine Dachhimmelverkleidung sowie ein Verfahren zur Herstellung einer Dachhimmelverkleidung zur Verfügung zu stellen, mittels welchen die oben genannten Nachteile vermieden werden können.

Die Aufgabe wird erfindungsgemäß mit den Merkmalen der unabhängigen Ansprüche gelöst. Zweckmäßige Ausgestaltungen und vorteilhafte Weiterbildungen der Erfindung sind in den Unteransprüchen angegeben.

Die Dachhimmelverkleidung gemäß der Erfindung zeichnet sich dadurch aus, dass diese einen Grundkörper, mindestens einen in dem Grundkörper ausgebildeten Luftkanal zur Führung eines Luftstroms durch den Grundkörper, und mindestens eine in dem Grundkörper ausgebildete Luftaustrittsöffnung, über welche der in dem Luftkanal geführte Luftstrom in einen Innenraum des Kraftfahrzeugs einströmen kann, aufweist, wobei der Grundkörper aus einem Partikelschaum ausgebildet ist.

Ferner wird die erfindungsgemäße Aufgabe durch ein Verfahren zur Herstellung einer Dachhimmelverkleidung für ein Kraftfahrzeug gelöst, bei welchem ein Grundkörper aus einem Partikelschaum ausgebildet wird, wobei während eines Ausschäumens des Partikelschaums des Grundkörpers mindestens ein Luftkanal in dem Grundkörper zur Führung eines Luftstroms durch den Grundkörper ausgebildet wird und wobei während des Ausschäumens des Partikelschaums des Grundkörpers mindestens eine Luftaustrittsöffnung in dem Grundkörper ausgebildet wird, über welche der in dem Luftkanal geführte Luftstrom in einen Innenraum des Kraftfahrzeugs einströmen kann.

Erfindungsgemäß ist nunmehr eine Dachhimmelverkleidung mit einem Grundkörper vorgesehen, wobei unmittelbar in dem Grundkörper ein Luftführungssystem integriert ist, welches zur Belüftung eines Innenraumes eines Kraftfahrzeugs dienen kann.

Das Luftführungssystem weist mindestens einen Luftkanal auf, welcher sich innerhalb des Grundkörpers erstreckt, so dass über den Luftkanal Luft durch die Dachhimmelverkleidung geführt werden kann.

Ferner weist das Luftführungssystem mindestens eine Luftaustrittsöffnung auf, über welche Luft aus dem Luftkanal in den Innenraum des Kraftfahrzeugs einströmen kann. Sowohl der mindestens eine Luftkanal als auch die mindestens eine Luftaustrittsöffnung können erfindungsgemäß bereits bei der Ausbildung und damit der Fertigung des Grundkörpers in den Grundkörper mit integriert werden, ohne dass zusätzliche Bauteile, welche sonst üblicherweise einen Luftkanal und eine Luftaustrittsöffnung ausbilden, in einem gesonderten Prozessschritt mit eingebracht werden müssen. Der mindestens eine Luftkanal und die mindestens eine Luftaustrittsöffnung werden unmittelbar durch den Grundkörper selber ausgebildet. Der Grundkörper ist dabei aus einem Partikelschaum ausgebildet. Während des Ausschäumens des Partikelschaums und damit während der Formgebung des Grundkörpers können dann der mindestens eine Luftkanal und die mindestens eine Luftaustrittsöffnung unmittelbar mit ausgebildet werden. Der Partikelschaum ist vorzugsweise aus einem thermoplastischen Kunststoffmaterial, beispielsweise expandiertes Polypropylen (EPP) oder expandiertes Polyethylen (EPE) ausgebildet. Der Partikelschaum weist bevorzugt eine Vielzahl von Partikelschaumperlen auf, die durch Zufuhr von Wärmeenergie, beispielsweise durch Zufuhr von Heißdampf, aufschäumen und verschweißen können. Der gesamte Grundkörper der Dachhimmelverkleidung ist erfindungsgemäß aus einem derartigen Partikelschaum ausgebildet, so dass der Grundkörper nunmehr nicht mehr aus einem Mehrschichtverbund ausgebildet ist, sondern aus lediglich einem Material. Eine Dachhimmelverkleidung, deren Grundkörper aus einem Partikelschaum ausgebildet ist, zeichnet sich insbesondere durch eine hohe Festigkeit, ein geringes Gewicht, hohe Temperaturbeständigkeit, gute Chemikalienbeständigkeit, sehr gute Wärmedämmung, gute Schallabsorbierung und eine einfache Recyclebarkeit aus. Bevorzugt können in dem Grundkörper auch zwei oder mehr Luftkanäle und/oder zwei oder mehr Luftaustrittsöffnungen angeordnet sein. Die eine oder die mehreren Luftaustrittsöffnungen münden vorzugsweise an einer sich parallel zum Dachhimmel erstreckenden Längsseitenfläche des Grundkörpers, so dass die Luftaustrittsöffnungen beispielsweise oberhalb der Fahrzeugsitze in dem Kraftfahrzeug angeordnet sein können, so dass über diese Luftaustrittsöffnungen vorzugsweise eine individuelle Klimatisierung der einzelnen Fahrzeuginsassen in dem Kraftfahrzeug erfolgen kann. Weiter ist es auch möglich, dass die eine oder die mehreren Luftaustrittsöffnungen an einem Randbereich des Grundkörpers ausgebildet sind, so dass die Luftaustrittsöffnungen in der Nähe einer oder mehrerer Fahrzeugscheiben angeordnet sein können und damit eine Klimatisierung der Fahrzeugscheiben über an der Dachhimmelverkleidung angeordneten Luftaustrittsöffnungen erfolgen kann.

Bevorzugt kann es vorgesehen sein, dass die mindestens eine Luftaustrittsöffnung mittels einer luftdurchlässigen Materialschicht verschlossen ist, wobei die luftdurchlässige Materialschicht an einer in Richtung Innenraum des Kraftfahrzeugs gerichteten Seitenfläche des Grundkörpers angeordnet sein kann. Mittels der luftdurchlässigen Materialschicht kann der Grundkörper an einer oder mehreren in Richtung des Innenraums des Kraftfahrzeugs gerichteten Seitenflächen verkleidet sein, um den optischen Gesamteindruck der Dachhimmelverkleidung für die Insassen des Kraftfahrzeugs zu verbessern. Zudem kann beim Durchströmen des Luftstroms durch das luftdurchlässige Material in den Innenraum des Kraftfahrzeugs der Luftstrom gleichmäßiger verteilt werden, so dass der Luftstrom von den Fahrzeuginsassen als angenehmer empfunden werden kann und dadurch der Komfort für die Fahrzeuginsassen verbessert werden kann. Die luftdurchlässige Materialschicht ist vorzugsweise derart an dem Grundkörper angeordnet, dass diese die mindestens eine Luftaustrittsöffnung überdeckt, so dass der aus der Luftaustrittsöffnung austretende Luftstrom die luftdurchlässige Materialschicht passieren muss. Die luftdurchlässige Materialschicht weist vorzugsweise eine wesentlich geringe Dicke auf als der Grundkörper. Die luftdurchlässige Materialschicht ist vorzugsweise bahnförmig ausgebildet. Die luftdurchlässige Materialschicht kann vorzugsweise die gesamten, für die Fahrzeuginsassen sichtbaren Seitenflächen des Grundkörpers überdecken. Insbesondere kann sich die luftdurchlässige Materialschicht über die gesamte, in Richtung des Innenraums zeigenden Längsseitenfläche des Grundkörpers erstrecken. Aber auch die Querseiten des Grundkörpers, welche abgewinkelt zu der Längsseitenfläche des Grundkörpers ausgerichtet sind, können mit der luftdurchlässigen Materialschicht überdeckt sein. Die luftdurchlässige Materialschicht kann beispielsweise aus einem Textilmaterial und/oder aus einem Kunststoffmaterial ausgebildet sein.

Die Befestigung der luftdurchlässigen Materialschicht an der Seitenfläche des Grundkörpers kann beispielsweise mittels einer stoffschlüssigen Verbindung zwischen der luftdurchlässigen Materialschicht und dem Grundkörper erfolgen.

Zur Befestigung der luftdurchlässigen Materialschicht an der Seitenfläche des Grundkörpers kann die luftdurchlässige Materialschicht beispielsweise mit dem Partikelschaum des Grundkörpers hinterschäumt sein. Durch die Hinterschäumung kann eine besonders stabile, stoffschlüssige Verbindung zwischen der luftdurchlässigen Materialschicht und dem Grundkörper ausgebildet werden. Zudem kann hierdurch bereits bei der Ausbildung des Grundkörpers selber, die Befestigung der luftdurchlässigen Materialschicht an dem Grundkörper erfolgen, so dass weitere Prozessschritte nicht erforderlich sind. Die luftdurchlässige Materialschicht kann beispielsweise mittels eines Spannrahmens oder mit einem sogenannten Rolle-zu-Rolle-Verfahren in die Kavität eingelegt werden, bevor ein Ausschäumen des Partikelschaums zur Ausbildung des Grundkörpers in der Kavität erfolgt.

Um eine besonders gute Haftung der luftdurchlässigen Materialschicht an dem Grundkörper erreichen zu können, kann zwischen dem Grundkörper und der luftdurchlässigen Materialschicht ein Haftvermittler angeordnet sein. Beispielsweise kann vor Einlegen der luftdurchlässigen Materialschicht in die Kavität, in welcher nachfolgend ein Ausschäumen des Partikelschaums des Grundkörpers erfolgt, eine in Richtung Grundkörper gerichtete Seitenfläche der luftdurchlässigen Materialschicht mit dem Haftvermittler beschichtet werden. Der Haftvermittler kann beispielsweise ein niedrigschmelzendes Polyolefin sein, welches einen Schmelzpunkt zwischen 90°C und 130°C aufweist.

Zur Erhöhung der Luftdurchtrittsmenge durch die luftdurchlässige Materialschicht kann die luftdurchlässige Materialschicht im Bereich der mindestens einen Luftaustrittsöffnung mittels eines Werkzeugs bearbeitet werden. Beispielsweise können mittels des Werkzeugs die einzelnen Öffnungen der luftdurchlässigen Materialschicht, durch welche der Luftstrom strömt, in ihrem Querschnitt vergrößert werden. Beispielsweise kann mittels des Werkzeugs eine Perforierung und/oder Ausdünnung der luftdurchlässigen Materialschicht im Bereich einer Luftaustrittsöffnung erfolgen. Das Werkzeug kann beispielsweise in Form eines innerhalb der Kavität verfahrbaren Stempels ausgebildet sein, an welchem Schneiden zur Perforierung und/oder Ausdünnung der luftdurchlässigen Materialschicht angeordnet sein können.

Beispielsweise kann die luftdurchlässige Materialschicht aus einem Dekormaterial ausgebildet sein, durch welches der optische Eindruck der Dachhimmelverkleidung individuell anpassbar ist.

Weiter ist es möglich, dass an einer von dem Innenraum des Kraftfahrzeugs weggerichteten Seitenfläche des Grundkörpers ein Abdeckelement angeordnet ist. Mittels des Abdeckelements kann der mindestens eine in dem Grundkörper ausgebildete Luftkanal in Richtung des Dachhimmels und damit in Richtung der Karosserie des Kraftfahrzeugs verschlossen werden. Der mindestens eine in dem Grundkörper ausgebildete Luftkanal weist vorzugsweise einen U-förmig ausgebildeten Querschnitt auf, so dass drei Seitenwände des Luftkanals durch den Grundkörper ausgebildet sein können. Mittels des Abdeckelements kann dieser einen U-förmigen Querschnitt aufweisende Luftkanal abgedeckt werden, so dass das Abdeckelement dann eine weitere, beispielsweise eine vierte Seitenwand des Luftkanals ausbilden kann. Es ist damit möglich, dass die Seitenwände des Luftkanals sowohl von dem Grundkörper als auch von dem Abdeckelement ausgebildet werden können. Beispielsweise kann es auch möglich sein, dass der Luftkanal einen runden Querschnitt aufweist, wobei zur Ausbildung des runden Querschnitts eine erste halbkreisförmige Wand des Luftkanals von dem Grundkörper ausgebildet ist und eine zweite halbkreisförmige Wand des Luftkanals von dem Abdeckelement ausgebildet ist, so dass die beiden halbkreisförmigen Wände zusammen die den Luftkanal begrenzende Wandung ausbilden können. Die von dem Innenraum des Kraftfahrzeugs weggerichtete Seitenfläche des Grundkörpers bildet vorzugsweise eine Oberseite des Grundkörpers aus. Das Abdeckelement ist vorzugsweise aus einem Kunststoffmaterial ausgebildet.

Das Abdeckelement kann stoffschlüssig und/oder kraftschlüssig und/oder formschlüssig an dem Grundkörper befestigt sein, so dass eine sichere und feste Verbindung zwischen dem Grundkörper und dem Abdeckelement ausgebildet werden kann.

Zur Ausbildung einer stoffschlüssigen Verbindung kann das Abdeckelement beispielsweise mittels einer Schweißverbindung an dem Grundkörper befestigt sein.

Weiter ist es möglich, dass das Abdeckelement zusätzlich oder alternativ an dem Grundkörper mittels einer Rastverbindung befestigt sein kann. Zur Ausbildung einer Rastverbindung kann beispielsweise eine Aussparung bzw. ein Hinterschnitt an dem Grundkörper vorgesehen sein, in welche bzw. in welchen ein Vorsprung des Abdeckelements eingreifen kann. Dabei ist es auch möglich, dass der Vorsprung an dem Grundkörper und die Aussparung bzw. der Hinterschnitt an dem Abdeckelement angeordnet sein können.

Eine weitere Möglichkeit einer Verbindung zwischen dem Abdeckelement und dem Grundkörper besteht in einer Ausbildung einer Presspassung zwischen dem Grundkörper und dem Abdeckelement.

Das Abdeckelement kann beispielsweise genauso wie der Grundkörper aus einem Partikelschaum ausgebildet sein. Ist das Abdeckelement ebenfalls aus einem Partikelschaum ausgebildet, kann es einfach und kostengünstig zusammen mit dem Grundkörper recycelt werden. Ein aus einem Partikelschaum ausgebildetes Abdeckelement zeichnet sich durch eine hohe Festigkeit bei sehr geringem Gewicht aus. Ferner kann insbesondere eine Schweißverbindung besonders gut zwischen dem Grundkörper und dem Abdeckelement ausgebildet werden, wenn beide aus einem Partikelschaum ausgebildet sind.

Bevorzugt kann das Abdeckelement eine besonders geringe Dicke aufweisen, so dass die Gesamtdicke der Dachhimmelverkleidung reduziert werden kann. Das Abdeckelement kann hierfür beispielsweise als ein Folienkörper ausgebildet sein, welcher über die Seitenfläche des Grundkörpers gespannt sein kann. Ist das Abdeckelement als Folienkörper ausgebildet, ist das Abdeckelement bevorzugt mittels einer Schweißverbindung an dem Grundkörper befestigt. Der Folienkörper kann beispielsweise eine Schaumfolie sein.

Um zusätzliche Bauteile in der Luftaustrittsöffnung anordnen zu können, welche beispielsweise die Richtung und/oder die Stärke des aus der Luftaustrittsöffnung austretenden Luftstroms beeinflussen können, kann es vorgesehen sein, dass an einer die mindestens eine Luftaustrittsöffnung begrenzenden Wandung ein Rahmenelement angeordnet ist. An dem Rahmenelement können auch nach dem Ausschäumen des Grundkörpers zusätzliche Bauteile montiert werden, so dass über das Rahmenelement auch nach dem Ausschäumen des Grundkörpers und damit nach dem Ausbilden der Luftaustrittsöffnung in dem Grundkörper noch weitere Bauteile angeordnet und befestigt werden können. Die zusätzlichen Bauteile können beispielsweise dazu dienen, den Querschnitt der Luftaustrittsöffnung auch nach der Ausformung der Luftaustrittsöffnung noch verändern zu können, indem die zusätzlichen Bauteile in der Luftaustrittsöffnung an dem Rahmenelement montiert werden können, um den Querschnitt der Luftaustrittsöffnung beispielsweise zu reduzieren.

Das Rahmenelement kann beispielsweise beim Ausformen des Grundkörpers und damit beim Ausformen der Luftaustrittsöffnung bereits mit in die Kavität gelegt werden, so dass das Rahmenelement formschlüssig in der Luftaustrittsöffnung beim Ausbilden des Grundkörpers und beim Ausbilden der Luftaustrittsöffnung in dem Grundkörper befestigt werden kann.

Weiter ist es auch möglich, dass das Rahmenelement mit einem Partikelschaum hinterschäumt ist und stoffschlüssig mit dem Grundkörper verbunden ist. Das Rahmenelement kann dann in einem zusätzlichen Prozessschritt in den fertig ausgeschäumten Grundkörper integriert werden. Der an dem Rahmenelement hinterschäumte Partikelschaum kann beispielsweise über eine Verschweißung mit dem Partikelschaum des Grundkörpers verbunden werden. Für die Verschweißung kann die Wärmeenergie in dem Partikelschaum genutzt werden, welche für das Ausschäumen und die Verschweißung der Partikelschaumperlen genutzt worden ist.

Das Rahmenelement kann beispielsweise in einem Spritzgussverfahren hergestellt sein.

Der in dem Grundkörper ausgebildete Luftkanal kann verschiedene Formen, insbesondere verschiedene Querschnittsformen aufweisen. Bevorzugt kann der mindestens eine Luftkanal einen rechteckförmigen oder runden Querschnitt aufweisen.

Dafür kann es bevorzugt vorgesehen sein, dass eine den mindestens einen Luftkanal begrenzende Wandung zumindest bereichsweise eckig oder rund ausgebildet ist

Die den Luftkanal begrenzende Wandung kann vollständig oder teilweise von dem Grundkörper ausgebildet sein. Ist die den Luftkanal begrenzende Wandung teilweise von den Grundkörper ausgebildet, so ist die den Luftkanal begrenzenden Wandung vorzugsweise an dem restlichen Bereich durch das Abdeckelement ausgebildet. Bevorzugt kann es daher vorgesehen sein, dass ein Teil einer den mindestens einen Luftkanal begrenzenden Wandung durch das Abdeckelement ausgebildet ist. Der Teil der Wandung des Luftkanals, welcher durch das Abdeckelement ausgebildet ist, kann geradlinig oder aber auch gebogen oder eckig ausgebildet sein.

Bevorzugt kann es vorgesehen sein, dass an einer Querseite des Grundkörpers mindestens eine mit dem mindestens einen Luftkanal verbundene Mündungsöffnung ausgebildet ist, über welche ein Luftstrom hin zu einer Scheibe des Kraftfahrzeugs führbar ist. Mittels der Mündungsöffnung kann unmittelbar zu einer Scheibe, wie einer Frontscheibe und/oder einer Heckscheibe und/oder einer Seitenscheibe des Kraftfahrzeugs, ein Luftstrom geführt werden, welcher ausgehend von der Mündungsöffnung entlang der jeweiligen Scheibe strömen kann, um eine Lüftung bzw. Klimatisierung der jeweiligen Scheibe erreichen zu können. Damit ist es möglich, auch die Scheiben des Kraftfahrzeugs ausgehend von dem Dachhimmel bzw. der Dachhimmelverkleidung zu belüften bzw. zu klimatisieren, wobei eine derartige Klimatisierung der Scheiben für die Fahrzeuginsassen kaum spürbar ist, so dass der Komfort für die Fahrzeuginsassen wesentlich erhöht werden kann. Die Mündungsöffnung kann ein oder mehrere Austrittsöffnungen zum Austritt des Luftstroms aufweisen. Bevorzugt sind mehrere Mündungsöffnungen an dem Grundkörper angeordnet, so dass beispielsweise jeder Scheibe des Kraftfahrzeugs ein oder mehrere Mündungsöffnungen zugeordnet sein können. Um eine möglichst unmittelbar benachbarte Anordnung der Mündungsöffnungen zu den Scheiben erreichen zu können, sind die ein oder mehreren Mündungsöffnungen vorzugsweise jeweils an einer der Querseiten des Grundkörpers angeordnet. Die Mündungsöffnungen werden vorzugsweise beim Ausschäumen des Grundkörpers unmittelbar mit in dem Grundkörper ausgebildet. Beispielsweise können die ein oder mehreren Mündungsöffnungen mittels eines Schiebers in dem ausschäumenden Partikelschaum ausgeformt werden. Weiter ist es möglich, dass die Mündungsöffnungen jeweils als Einlegeteil, beispielsweise als Spritzguss-Einlegeteil, ausgebildet sind und mit in die Kavität des ausschäumenden Partikelschaums des Grundkörpers eingelegt werden.

Auch die Mündungsöffnungen können mittels des Abdeckelements nach oben hin verschlossen bzw. abgedeckt sein.

Um einen besonders breiten und gleichmäßig ausgebildeten Luftstrom erreichen zu können, kann die mindestens eine Mündungsöffnung einen Querschnitt aufweisen, welcher sich in Richtung der Scheibe vergrößert. Vorzugsweise vergrößert sich der Querschnitt der Mündungsöffnung kontinuierlich. Die Mündungsöffnung kann beispielsweise einen dreieckförmigen Querschnitt aufweisen, so dass die Mündungsöffnung die Form eines Diffusors aufweisen kann, innerhalb welchem die Geschwindigkeit des Luftstroms hin zu der Mündungsöffnung reduziert werden kann.

Weiter ist es möglich, dass in der mindestens einen Mündungsöffnung mindestens zwei Leitelemente angeordnet sind. Die Leitelemente können den Luftstrom gezielt führen, so dass eine besonders gleichmäßige Verteilung des Luftstroms über den gesamten Querschnitt der Mündungsöffnung erreicht werden kann. Die Leitelemente können beispielsweise als Führungsrippen ausgebildet sein. Die Leitelemente sind bevorzugt beabstandet zueinander in der Mündungsöffnung angeordnet.

Um eine besonders gute Recycelbarkeit der Dachhimmelverkleidung erreichen zu können, ist es bevorzugt vorgesehen, dass der Grundkörper und/oder die luftdurchlässige Materialschicht und/oder das Abdeckelement aus einem gleichen Partikelschaummaterial, insbesondere einem gleichen polymeren Partikelschaummaterial, ausgebildet sind. Beispielsweise kann als Partikelschaummaterial Polypropylen oder Polyethylen für den Grundkörper und/oder die luftdurchlässige Materialschicht und/oder das Abdeckelement verwendet werden. Werden gleiche Partikelschaummaterialien verwendet, kann auch die Befestigung der Bauteile aneinander verbessert werden, insbesondere wenn die Bauteile miteinander verschweißt werden.

Um die Funktionalität der Dachhimmelverkleidung weiter zu erhöhen, kann es vorgesehen sein, dass der Grundkörper mindestens eine Kabelführung und/oder mindestens eine Kabelklemmung ausbildet. Beispielsweise kann in dem Grundkörper ein Kanal ausgebildet sein, welcher die Kabelführung und/oder Kabelklemmung ausbilden kann. Die Kabelführung und/oder Kabelklemmung kann unmittelbar bei der Herstellung des Grundkörpers in diesem mit ausgebildet werden, so dass keine spätere Nachbearbeitung des Grundkörpers zur Ausbildung der Kabelführung und/oder der Kabelklemmung erfolgen muss. Auch müssen keine zusätzlichen Bauteile vorgesehen werden, um eine Kabelführung und/oder Kabelklemmung auszubilden, da diese alleine durch das Material des Grundkörpers ausgebildet sein kann. Die Kabelführung und/oder Kabelklemmung kann beispielsweise zur Führung und/oder Fixierung eines zu einem in der Dachhimmelverkleidung integrierten Leuchtelements oder anderen in der Dachhimmelverkleidung aufgenommenen elektronischen Bauteilen dienen.

Nachfolgend wird die Erfindung unter Bezugnahme auf die anliegenden Zeichnungen anhand bevorzugter Ausführungsformen näher erläutert.

Es zeigen:
- Fig. 1: eine schematische Darstellung eines Kraftfahrzeugs mit einer Dachhimmelverkleidung gemäß der Erfindung,
- Fig. 2: eine schematische Schnittdarstellung entlang der Line A-A der in Fig. 2 gezeigten Dachhimmelverkleidung,
- Fig. 3: eine schematische Schnittdarstellung entlang der in Fig. 2 gezeigten Line B-B,
- Fig. 4: eine schematische Schnittdarstellung einer Kavität mit einem darin beweglich angeordneten Werkzeug zur Bearbeitung der luftdurchlässigen Materialschicht,
- Fig. 5: eine schematische Schnittdarstellung im Bereich einer Luftaustrittsöffnung mit einem darin angeordneten Rahmenelement,
- Fig. 6: eine schematische Schnittdarstellung eines Rahmenelements mit hinterschäumten Partikelschaum vor einem Einsetzen in die Luftaustrittsöffnung,
- Fig. 7: eine schematische Schnittdarstellung eines wie in Fig. 6 gezeigten Rahmenelements eingesetzt in eine Luftaustrittsöffnung,
- Fig. 8: eine weitere schematische Schnittdarstellung einer Dachhimmelverkleidung gemäß der Erfindung,
- Fig. 9: eine schematische Detaildarstellung einer Befestigung eines Abdeckelements an einem Grundkörper der Dachhimmelverkleidung,
- Fig. 10: eine schematische Schnittdarstellung der in Fig. 2 gezeigten Dachhimmelverkleidung im Bereich der Mündungsöffnungen,
- Fig. 11: eine schematische Schnittdarstellung eines Luftkanals mit einer den Luftkanal begrenzenden Wandung, welche bereichsweise eckig ausgebildet ist,
- Fig. 12: eine schematische Schnittdarstellung eines Luftkanals mit einer den Luftkanal begrenzenden Wandung, welche bereichsweise rund ausgebildet ist,
- Fig. 13: eine schematische Schnittdarstellung eines Luftkanals mit einer den Luftkanal begrenzenden Wandung, welche vollständig rund ausgebildet ist,
- Fig. 14: eine schematische Schnittdarstellung einer in dem Grundkörper ausgebildeten Kabelführung,
- Fig. 15: eine schematische Schnittdarstellung einer in dem Grundkörper ausgebildeten Kabelklemmung,
- Fig. 16: eine schematische Schnittdarstellung des in Fig. 2 eingezeichneten Bereichs C an einer Gabelung des Luftkanals gemäß einer ersten Ausgestaltung, und
- Fig. 17: eine schematische Schnittdarstellung des in Fig. 2 eingezeichneten Bereichs C an einer Gabelung des Luftkanals gemäß einer zweiten Ausgestaltung.

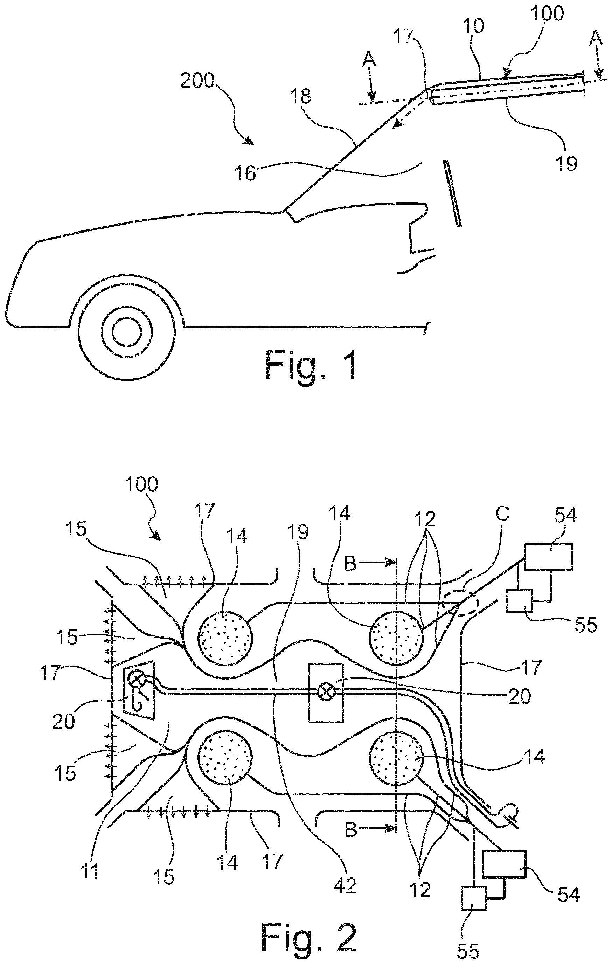

- Fig. 1: zeigt schematisch einen Ausschnitt eines Kraftfahrzeugs 200, an dessen Dachhimmel 10 eine Dachhimmelverkleidung 100 angeordnet ist.

In Fig. 2 ist ein Schnitt entlang der in Fig. 1 gezeigten Linie A-A der Dachhimmelkleidung 100 gezeigt. Die Dachhimmelverkleidung 100 erstreckt sich vorzugsweise über die gesamte Länge und Breite des Dachhimmels 10.

Die Dachhimmelverkleidung 100 weist einen Grundkörper 11 auf, welcher sich erfindungsgemäß über die gesamte Breite und Länge des Dachhimmels 10 erstreckt.

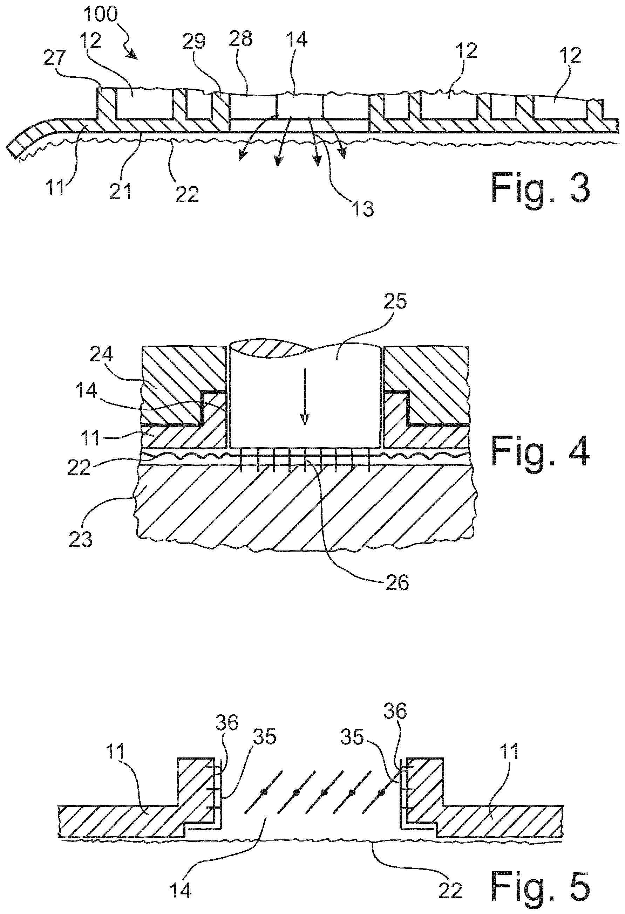

Der Grundkörper 11 weist eine im Wesentlichen rechteckförmige Form auf. Der Grundkörper 11 ist, wie in Fig. 1 und 2 zu erkennen ist, plattenförmig ausgebildet. An dem Grundkörper 11 sind Luftkanäle 12 ausgebildet, durch welche ein oder mehrere Luftströme 13, wie in Fig. 3 mit den Pfeilen angedeutet ist, durch den Grundkörper 11 geführt werden können.

Ferner sind in dem Grundkörper 11 mehrere Luftaustrittsöffnungen 14 ausgebildet, über welche jeweils ein Luftstrom 13 in einen Innenraum 16 des Kraftfahrzeugs 200, in welchem die Fahrzeuginsassen sitzen, einströmen kann. Bei der hier gezeigten Ausgestaltung sind vier Luftaustrittsöffnungen 14 an dem Grundkörper 11 ausgebildet, welche jeweils oberhalb der Fahrzeugsitze der Fahrzeuginsassen in dem Kraftfahrzeug 200 angeordnet sind. Ferner sind in dem Grundkörper 11 mehrere Mündungsöffnungen 15 ausgebildet, über welche ebenfalls jeweils ein Luftstrom 13 in den Innenraum 16 des Kraftfahrzeugs 200 einströmen kann, wobei die Mündungsöffnungen 15 an einer Querseite 17 des Grundkörpers 11 angeordnet sind, so dass über die Mündungsöffnungen 15 ein Luftstrom 13 direkt hin zur einer Scheibe 18 des Kraftfahrzeugs 200 geführt werden kann, um die jeweilige Scheibe 18 belüften, insbesondere enteisen, zu können. Die Luftaustrittsöffnungen 14 sind hingegen an einer Längsseitenfläche 19 des Grundkörpers 11 ausgebildet.

Der Grundkörper 11 ist aus einem Partikelschaum ausgebildet, welcher ausgeschäumt ist und bei welchem die Partikelschaumperlen durch Zufuhr von Wärmeenergie verschweißt sind. Die Luftkanäle 12, die Luftaustrittsöffnungen 14 und die Mündungsöffnungen 15 sind unmittelbar beim Ausschäumen des Grundkörpers 11 in den Grundkörper 11 mit eingeformt worden. Beim Ausschäumen des Partikelschaums des Grundkörpers 11 können weitere Bauteile in den Grundkörper 11 und damit in die Dachhimmelverkleidung 100 unmittelbar mit eingebracht werden, wie beispielsweise Leuchtelemente 20.

Wie insbesondere in Fig. 3 zu erkennen ist, ist an einer in Richtung Innenraum 16 des Kraftfahrzeugs 200 gerichteten Seitenfläche 21 des Grundkörpers 11, welche hier eine Unterseite des Grundkörpers 11 ausbildet, eine luftdurchlässige Materialschicht 22 angeordnet. Die luftdurchlässige Materialschicht 22 überdeckt die Luftaustrittsöffnungen 14, so dass die Luftaustrittsöffnungen 14 für die Fahrzeuginsassen nicht sichtbar sind. Wie in Fig. 3 anhand der Pfeile gezeigt ist, kann der Luftstrom 13 durch die luftdurchlässige Materialschicht 22 hindurchströmen.

Die luftdurchlässige Materialschicht 22 ist stoffschlüssig mit dem Grundkörper 11 verbunden, indem die luftdurchlässige Materialschicht 22 mit dem Partikelschaum des Grundkörpers 11 hinterschäumt ist. Dafür wird die luftdurchlässige Materialschicht 22 beim Ausschäumen des Grundkörpers 11 mit in die Kavität des Ausformwerkzeugs eingebracht und zwischen zwei die Kavität ausbildenden Formteilhäften 23, 24 des Ausformwerkzeugs eingespannt, wie in Fig. 4 zu erkennen ist.

Um die Durchströmbarkeit der luftdurchlässigen Materialschicht 22 verbessern zu können, kann die luftdurchlässige Materialschicht 22 mittels eines Werkzeugs 25 bearbeitet werden, wie in Fig. 4 gezeigt ist. Wie in Fig. 4 gezeigt ist, kann das Werkzeug 25 senkrecht zu der eingespannten luftdurchlässigen Materialschicht 22 bewegt werden. Beispielsweise können mittels des Werkzeugs 25 die einzelnen Öffnungen der luftdurchlässigen Materialschicht 22, durch welche der Luftstrom strömt, in ihrem Querschnitt vergrößert werden. Beispielsweise kann mittels des Werkzeugs 25 eine Perforierung und/oder Ausdünnung der luftdurchlässigen Materialschicht 22 im Bereich einer Luftaustrittsöffnung 14 erfolgen. Das Werkzeug 25 kann beispielsweise in Form eines innerhalb der Kavität verfahrbaren Stempels ausgebildet sein, an welchem Schneiden 26 zur Perforierung und/oder Ausdünnung der luftdurchlässigen Materialschicht 22 angeordnet sein können.

Die luftdurchlässige Materialschicht 22 kann als Folie ausgebildet sein. Beispielsweise kann die luftdurchlässige Materialschicht aus einem Dekormaterial ausgebildet sein, welche aus einem Kunststoffmaterial und/oder einem Textilmaterial ausgebildet sein kann. Die luftdurchlässige Materialschicht 22 kann, ebenso wie der Grundkörper 11, aus einem Partikelschaum ausgebildet sein.

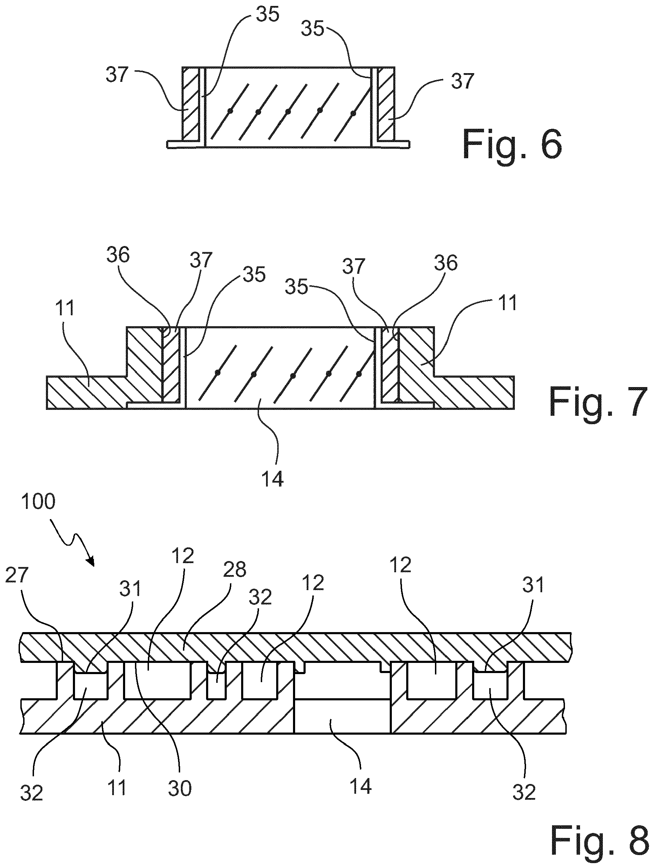

An einer von dem Innenraum 16 des Kraftfahrzeugs 200 weggerichteten Seitenfläche 27 des Grundkörpers 11, welche eine Oberseite des Grundkörpers 11 ausbildet, ist ferner ein Abdeckelement 28 angeordnet, wie beispielsweise in Fig. 3 und 8 zu erkennen ist. Mittels des Abdeckelements 28 können die Luftkanäle 12 in Richtung des Dachhimmels 10 und damit in Richtung der Karosserie des Kraftfahrzeugs 200 verschlossen werden.

Die Luftkanäle 12 weisen jeweils einen U-förmig ausgebildeten Querschnitt auf, wie in Fig. 3 und 8 zu erkennen ist, so dass drei Seitenwände eines Luftkanals 12 durch den Grundkörper 11 ausgebildet sind. Mittels des Abdeckelements 28 können diese einen U-förmigen Querschnitt aufweisenden Luftkanäle 12 abgedeckt werden, so dass das Abdeckelement 28 eine vierte Seitenwand der Luftkanäle 12 ausbildet.

Wie in Fig. 3 gezeigt ist, kann das Abdeckelement 28 in Form einer Folie, beispielsweise einer Schaumfolie ausgebildet sein. Weiter ist es auch möglich, wie in Fig. 8 gezeigt ist, dass das Abdeckelement 28 eine größere Dicke aufweist und in Form eines Schaumkörpers, beispielsweise einem Schaumkörper aus einem Partikelschaum, ausgebildet ist.

Befestigt werden kann das Abdeckelement 28 beispielsweise mittels einer Schweißverbindung 29 zwischen dem Abdeckelement 28 und dem Grundkörper 11.

Wie in Fig. 8 ferner zu erkennen ist, können an einer in Richtung des Grundkörpers 11 gerichteten Seitenfläche 30 des Abdeckelements 28 Vorsprünge 31 ausgebildet sein, welche zumindest bereichsweise in Befestigungsöffnungen 32 und/oder in die Luftkanäle 12 hineinragen können, um das Abdeckelement 28 an dem Grundkörper 11 kraftschlüssig und/oder formschlüssig zu befestigen.

Die Vorsprünge 31 können beispielsweise in die Befestigungsöffnungen 31 und/oder die Luftkanäle 12 des Grundkörpers 11 eingepresst sein, um einen Presssitz zwischen dem Abdeckelement 28 und dem Grundkörper 11 auszubilden.

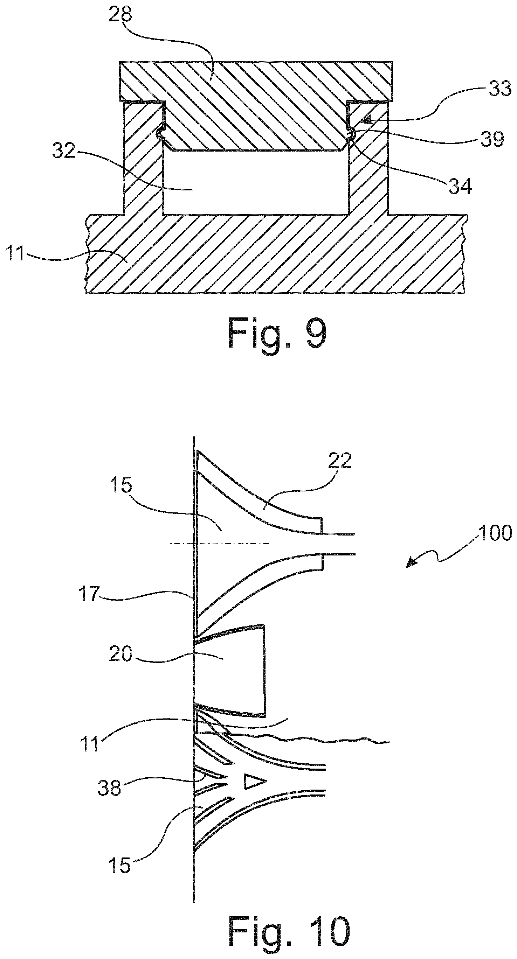

Weiter ist es möglich, das Abdeckelement 28 mittels einer Rastverbindung 33, wie sie in Fig. 9 gezeigt ist, an dem Grundkörper 11 zu befestigen. Zur Ausbildung der Rastverbindung 33 ist eine Aussparung 34 bzw. Hinterschnitt an dem Grundkörper 11 ausgebildet, in welche ein Vorsprung 39 des Abdeckelements 28 eingreifen kann. Die Aussparung 34 ist an einer Wandung des Luftkanals 12 und/oder einer Wandung der Befestigungsöffnung 32 ausgebildet. Der Vorsprung 39 ist an dem Vorsprung 31 des Abdeckelements 18 angeordnet.

Wie beispielsweise in Fig. 5 gezeigt ist, kann in der Luftaustrittsöffnung 14 ein Rahmenelement 35 angeordnet sein, welches an einer die Luftaustrittsöffnung 14 begrenzenden Wandung 36 befestigt sein kann. An dem Rahmenelement 35 können auch nach dem Ausschäumen des Grundkörpers 11 und damit nach dem Ausbilden der Luftaustrittsöffnung 14 in dem Grundkörper 11 noch weitere zusätzliche Bauteile angeordnet und befestigt werden. Die zusätzlichen Bauteile können beispielsweise dazu dienen, den Querschnitt der Luftaustrittsöffnung 14 auch nach der Ausformung der Luftaustrittsöffnung 14 noch verändern zu können, indem die zusätzlichen Bauteile in der Luftaustrittsöffnung 14 an dem Rahmenelement 35 montiert werden, um den Querschnitt der Luftaustrittsöffnung 14 beispielsweise zu reduzieren.

Das Rahmenelement 35 kann aus einem Kunststoffmaterial ausgebildet sein und beispielsweise ein Spritzgussformteil sein.

Bei der in Fig. 5 gezeigten Ausgestaltung ist das Rahmenelement 35 formschlüssig mit dem Grundkörper 11 verbunden.

Fig. 6 und Fig. 7 zeigen eine Ausgestaltung, bei welcher zunächst das Rahmenelement 35 mit einem Partikelschaum 37 hinterschäumt wird. Fig. 6 zeigt das Rahmenelement 35 mit dem hinterschäumten Partikelschaum 37, wobei der Partikelschaum 37 an einer Außenfläche des Rahmenelements 35 angeordnet ist, welche im montierten Zustand in Richtung der Wandung 36 der Luftaustrittsöffnung 14 des Grundkörpers 11 gerichtet ist.

Das Rahmenelement 35, welches bereits mit dem Partikelschaum 37 hinterschäumt ist, wird dann in den bereits fertig ausgeschäumten Grundkörper 11 eingebracht, indem der das Rahmenelement 35 in die Luftaustrittsöffnung 14 eingesetzt wird. Nach dem Einsetzen erfolgt dann eine Verschweißung des an dem Rahmenelement 35 angeordneten Partikelschaums 37 mit dem Partikelschaum des Grundkörpers 11, wie in Fig. 7 gezeigt ist.

Fig. 10 zeigt eine Schnittdarstellung der in Fig. 1 gezeigten Dachhimmelverkleidung 100, so dass die Mündungsöffnungen 15, welche in Richtung der Frontscheibe des Kraftfahrzeugs 200 gerichtet sind, in einer zumindest teilweise geschnittenen Draufsicht zu erkennen sind.

Wie in Fig. 10 zu erkennen ist, vergrößert sich der Querschnitt der Mündungsöffnung 15 in Richtung der Scheibe 18, welche hier die Frontscheibe ist. Bei der hier gezeigten Ausgestaltung vergrößert sich der Querschnitt der Mündungsöffnung 15 kontinuierlich hin zu der Scheibe 18. Die Mündungsöffnung 15 weist die Form eines Diffusors auf, innerhalb welchem die Geschwindigkeit des Luftstroms 13 hin zu der Mündungsöffnung 15 reduziert werden kann.

Wie in Fig. 10 weiter zu erkennen ist (untere Schnittdarstellung) sind in der Mündungsöffnung 15 mehrere Leitelemente 38 angeordnet sind. Die Leitelemente 38 können den Luftstrom 13 gezielt führen, so dass eine besonders gleichmäßige Verteilung des Luftstroms 13 über den gesamten Querschnitt der Mündungsöffnung 15 erreicht werden kann. Die Leitelemente 38 bilden Führungsrippen für den Luftstrom 13 aus.

In der oberen Darstellung von Fig. 10 ist zu erkennen, dass die luftdurchlässige Materialschicht 22 auch im Bereich der Mündungsöffnung 15 angeordnet ist und dort zur Befestigung an dem Grundkörper 11 beispielsweise verschweißt ist. Ist die Mündungsöffnung 22 durch ein in den Grundkörper 11 eingelegtes Einlegeteil ausgebildet, so kann die luftdurchlässige Materialschicht 22 mit diesem Einlegeteil verschweißt sein.

Durch die Mündungsöffnung 15 kann nunmehr von der Dachhimmelverkleidung 100 aus eine Enteisung der Scheibe 18 erfolgen, so dass der Luftstrom 13 den Fahrzeuginsassen nicht von unten in Richtung des Gesichts geblasen wird, sondern von oben nach unten geblasen wird, so dass die Fahrzeuginsassen den Luftstrom 13 nicht spüren, wodurch ein deutlich stärkerer Luftstrom 13 für die Enteisung der Scheibe 18 durch die Mündungsöffnung 15 in Richtung der Scheibe 18 geführt werden kann.

Die Dachhimmelverkleidung 100 mit dem darin integrierten Lüftungssystem ermöglicht damit sowohl eine individualisierbare Überkopfbelüftung der Fahrzeuginsassen und zusätzlich ist eine Scheiben-Enteisung über die Dachhimmelverkleidung 100 möglich.

Damit können Belüftungen in der Instrumententafel des Kraftfahrzeugs 200 reduziert oder sogar ganz entfallen.

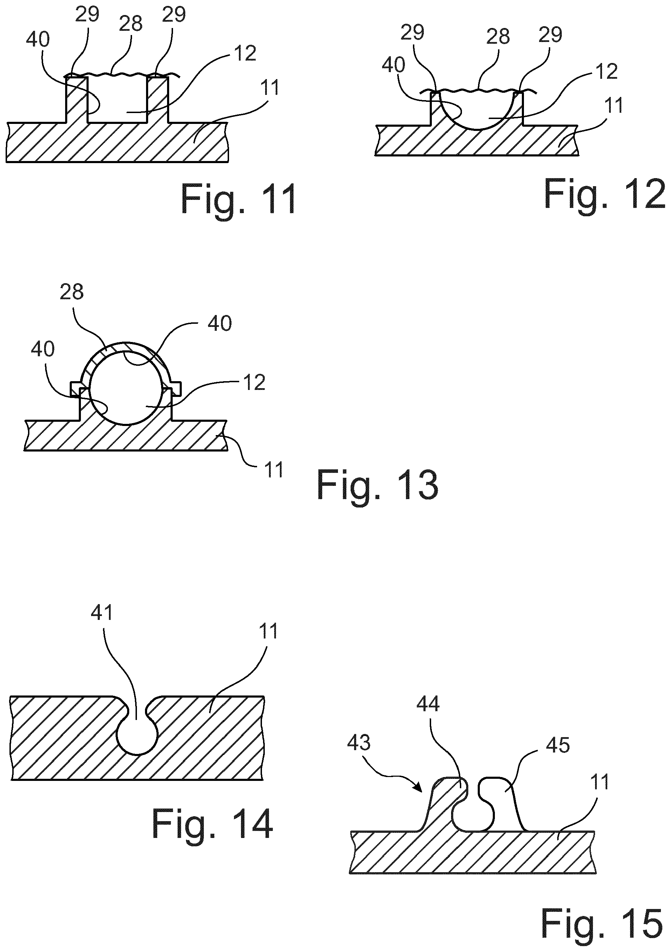

In den Fig. 11 bis 13 sind unterschiedliche Ausgestaltungen eines Luftkanals 12 gezeigt.

Bei der in Fig. 11 gezeigten Ausgestaltung ist eine den Luftkanal 12 begrenzende Wandung 40 bereichsweise eckig ausgebildet, wobei der Bereich der Wandung 40, der durch den Grundkörper 11 ausgebildet ist, eckig ausgebildet ist. Das Abdeckelement 28 bildet ebenfalls einen Teil der Wandung 40 aus, wobei das Abdeckelement 28 geradlinig ausgebildet ist. Das Abdeckelement 28 ist hier vorzugsweise als Folienkörper ausgebildet und mit dem Grundkörper 11 verschweißt, um den Luftkanal 12 möglichst dicht zu verschließen. Der Luftkanal 12 weist bei der in Fig. 11 gezeigten Ausgestaltung einen rechteckförmigen Querschnitt auf, wobei drei Seitenwände des Luftkanals 12 durch den Grundkörper 11 und eine Seitenwand des Luftkanals 12 durch das Abdeckelement 28 ausgebildet sind, welche zusammen die den Luftkanal 12 begrenzende Wandung 40 ausbilden.

Fig. 12 zeigt eine weitere mögliche Ausgestaltung eines Luftkanals 12, bei welcher die den Luftkanal 12 begrenzende Wandung 40 bereichsweise rund bzw. gebogen ausgebildet ist, wobei der Bereich der Wandung 40, der durch den Grundkörper 11 ausgebildet ist, rund ausgebildet ist. Auch hier bildet das Abdeckelement 28 einen Teil der Wandung 40 aus, wobei das Abdeckelement 28 auch hier geradlinig ausgebildet ist. Das Abdeckelement 28 ist hier vorzugsweise als Folienkörper ausgebildet und mit dem Grundkörper 11 verschweißt, um den Luftkanal 12 möglichst dicht zu verschließen. Der Luftkanal 12 weist bei der in Fig. 11 gezeigten Ausgestaltung einen im Wesentlichen halbkreisförmigen Querschnitt auf, wobei drei Seitenwände des Luftkanals 12 durch den Grundkörper 11 und eine Seitenwand des Luftkanals 12 durch das Abdeckelement 28 ausgebildet sind, welche zusammen die den Luftkanal 12 begrenzende Wandung 40 ausbilden.

Bei der in Fig. 13 gezeigten Ausgestaltung ist die gesamte den Luftkanal 12 begrenzende Wandung 40 rund ausgebildet, so dass der Luftkanal 12 einen runden Querschnitt aufweist. Sowohl der Bereich der Wandung 40, der durch den Grundkörper 11 ausgebildet ist, ist rund ausgebildet, als auch der Bereich der Wandung 40, der durch das Abdeckelement 28 ausgebildet ist, ist rund ausgebildet. Bei einer derartigen runden Ausgestaltung weist der Luftkanal 12 eine besonders gute Strömungsführung der durchströmenden Luft auf, wobei Verwirbelungen, die sonst üblicherweise an Kanten entstehen können, vermieden werden können. Das Abdeckelement 28 kann hier beispielsweise in Form eines Schaumkörpers ausgebildet sein.

In Fig. 14 ist eine Kabelführung 41 gezeigt, welche in dem Grundkörper 11 ausgebildet ist, indem die Kabelführung 41 bereits bei der Ausformung des Grundkörpers 11 in dem Grundkörper 11 mit ausgeformt worden ist. Die Kabelführung 41 kann als nutförmige Vertiefung in dem Grundkörper 11 ausgebildet sein. In die Kabelführung 41 kann ein Kabel 42 eingelegt und geführt sein, wie es beispielsweise in Fig. 2 gezeigt ist, welches mit einem oder beiden Leuchtelementen 20 verbunden sein kann, um diese elektrisch anzuschließen.

Fig. 15 zeigt eine Kabelklemmung 43, in welchem beispielsweise ein Kabel 42 geklemmt gehalten sein kann. Auch die Kabelklemmung 43 ist hier unmittelbar in den Grundkörper 11 integriert ausgebildet, indem die Kabelklemmung 43 aus dem Material des Grundkörpers 11 mit ausgeformt ist. Die Kabelklemmung 43 kann damit bereits bei der Ausformung des Grundkörpers 11 an dem Grundkörper 11 unmittelbar mit ausgebildet werden. Die Kabelklemmung 43 weist bei der hier gezeigten Ausgestaltung zwei sich gegenüberstehende Klemmarme 44, 45 auf, welche von einer Oberfläche des Grundkörpers 11 hervorstehen. Die Klemmarme 44, 45 sind zumindest an ihrem freien Ende zueinander gebogen ausgebildet, so dass diese ein zu klemmendes Kabel 42 umgreifen können.

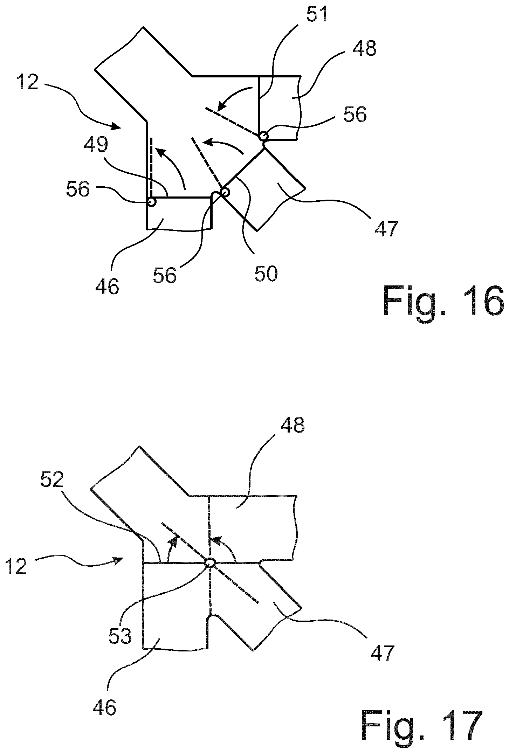

In Fig. 16 und 17 sind zwei mögliche Ausgestaltungen für eine Ausbildung des Luftkanals 12 in dem in Fig. 2 eingezeichneten Bereich C dargestellt, wobei dies der Bereich ist, wo die Luft über den Luftkanal 12 in die Dachhimmelverkleidung 100 einströmt. In diesem Bereich gabelt sich der Luftkanal 12 in drei Luftkanalabschnitte 46, 47, 48, welche jeweils die Luft zu den Luftaustrittsöffnungen 14 und/oder zu den Mündungsöffnungen führen.

Um eine Steuerung der Durchströmung der Luft durch die einzelnen Luftkanalabschnitte 46, 47, 48 erreichen zu können, sind an jedem Luftkanalabschnitt 46, 47, 48 Regelklappen 49, 50, 51 angeordnet, welche wie in der Fig. 16 angedeutet ist, in eine Offenstellung und eine geschlossene Stellung bewegt, insbesondere verschwenkt werden können, wie mit den Pfeilen angedeutet ist. In einer Offenstellung kann Luft in den jeweiligen Luftkanalabschnitt 46, 47, 48 einströmen. In der geschlossenen Stellung verschließt die Regelklappe 49, 50, 51 den jeweiligen Luftkanalabschnitt 46, 47, 48, so dass dann keine Luft in den jeweiligen Luftkanalabschnitt 46, 47, 48 einströmen kann. Die Regeklappen 49, 50, 51 sind jeweils mittels einer Gelenkverbindung 56 an einer Wandung des Luftkanals 12 bzw. der Luftkanalabschnitte 46, 47, 48 bewegbar angelenkt.

Fig. 17 zeigt eine Ausgestaltung, bei welcher lediglich eine Regelklappe 52 in dem Luftkanal 12 angeordnet ist, welche in Abhängigkeit ihrer Position eine Zufuhr der Luft in die einzelnen Luftkanalabschnitte 46, 47, 48 steuern kann. Die Regelklappe 52 ist an einem Drehpunkt 53 drehbar bzw. verschwenkbar gelagert. Mittels einer derartigen Regelklappe 52 können entweder alle Luftkanalabschnitte 46, 47, 48 geöffnet werden oder zwei Luftkanalabschnitte 46, 47, 48 werden verschlossen und ein Luftkanalabschnitt 46, 47, 48 ist geöffnet. Die möglichen Positionen der Regelklappe 52 sind in Fig. 17 angedeutet gezeigt.

Die Regelung der Luftzufuhr in den Luftkanal 12 und die Luftkanalabschnitte 46, 47, 48 kann auch mit anderen Mitteln erreicht werden, beispielsweise über die Anordnung von Ventilen.

Wie in Fig. 2 gezeigt ist, können die Luftkanäle 12 mit einem Klimagerät 54 verbunden sein, über welche eine Einstellung der Temperatur der durch den Luftkanal 12 strömenden Luft erfolgen kann. Ferner kann auch eine Steuereinrichtung 55 vorgesehen sein, welche beispielsweise die Menge und/oder die Geschwindigkeit der durch den Luftkanal 12 strömenden Luft regeln kann und/oder welche das Klimagerät 54 steuern kann und/oder welche die Bewegung der Regelklappen 49, 50, 51, 52 steuern kann.

### Bezugszeichen

- 100: Dachhimmelverkleidung
- 200: Kraftfahrzeug
- 10: Dachhimmel
- 11: Grundkörper
- 12: Luftkanal
- 13: Luftstrom
- 14: Luftaustrittsöffnung
- 15: Mündungsöffnung
- 16: Innenraum
- 17: Querseite
- 18: Scheibe
- 19: Längsseitenfläche
- 20: Leuchtelement
- 21: Seitenfläche
- 22: Luftdurchlässige Materialschicht
- 23: Formteilhälfte
- 24: Formteilhälfte
- 25: Werkzeug
- 26: Schneide
- 27: Seitenfläche
- 28: Abdeckelement
- 29: Schweißverbindung
- 30: Seitenfläche
- 31: Vorsprung
- 32: Befestigungsöffnung
- 33: Rastverbindung
- 34: Aussparung
- 35: Rahmenelement
- 36: Wandung
- 37: Partikelschaum
- 38: Leitelement
- 39: Vorsprung
- 40: Wandung
- 41: Kabelführung
- 42: Kabel
- 43: Kabelklemmung
- 44: Klemmarm
- 45: Klemmarm
- 46: Luftkanalabschnitt
- 47: Luftkanalabschnitt
- 48: Luftkanalschnitt
- 49: Regelklappe
- 50: Regelklappe
- 51: Regelklappe
- 52: Regelklappe
- 53: Drehpunkt
- 54: Klimagerät
- 55: Steuereinrichtung
- 56: Gelenkverbindung

## Patentansprüche

1. Dachhimmelverkleidung (100) für ein Kraftfahrzeug (200), mit
einem plattenförmigen Grundkörper (11), welcher so gestaltet ist, dass er sich über die gesamte Breite und Länge eines Dachhimmels erstreckt,
mindestens einem in dem Grundkörper (11) ausgebildeten Luftkanal (12) zur Führung eines Luftstroms (13) durch den Grundkörper (11), und
mindestens einer in dem Grundkörper (11) ausgebildeten Luftaustrittsöffnung (14), über welche der in dem Luftkanal (12) geführte Luftstrom (13) in einen Innenraum (16) des Kraftfahrzeugs (200) einströmen kann,
wobei der gesamte Grundkörper (11) aus einem Partikelschaum und nicht als Mehrschichtverbund ausgebildet ist.

2. Dachhimmelverkleidung (100) nach Anspruch 1, **dadurch gekennzeichnet, dass** die mindestens eine Luftaustrittsöffnung (14) mittels einer luftdurchlässigen Materialschicht (22) verschlossen ist, wobei die luftdurchlässige Materialschicht (22) an einer in Richtung Innenraum (16) des Kraftfahrzeugs (200) gerichteten Seitenfläche (21) des Grundkörpers (11) angeordnet ist,
wobei optional zur Befestigung der luftdurchlässigen Materialschicht (22) an der Seitenfläche (21) des Grundkörpers (11) die luftdurchlässige Materialschicht (22) mit dem Partikelschaum des Grundkörpers (11) hinterschäumt ist.

3. Dachhimmelverkleidung (100) nach Anspruch 2, **dadurch gekennzeichnet, dass** zwischen dem Grundkörper (11) und der luftdurchlässigen Materialschicht (22) ein Haftvermittler angeordnet ist.

4. Dachhimmelverkleidung (100) nach einem der Ansprüche 2 bis 3, **dadurch gekennzeichnet, dass** die luftdurchlässige Materialschicht (22) aus einem Dekormaterial ausgebildet ist.

5. Dachhimmelverkleidung (100) nach einem der Ansprüche 1 bis 4, **dadurch gekennzeichnet, dass** an einer von dem Innenraum (16) des Kraftfahrzeugs (200) weggerichteten Seitenfläche (27) des Grundkörpers (11) ein Abdeckelement (28) angeordnet ist,
wobei optional das Abdeckelement (28) stoffschlüssig und/oder kraftschlüssig und/oder formschlüssig an dem Grundkörper (11) befestigt ist.

6. Dachhimmelverkleidung (100) nach Anspruch 5, **dadurch gekennzeichnet, dass** das Abdeckelement (28) an dem Grundkörper (11) mittels einer Schweißverbindung (29) befestigt ist, und/oder
**dadurch gekennzeichnet, dass** das Abdeckelement (28) an dem Grundkörper (11) mittels einer Rastverbindung (33) befestigt ist.

7. Dachhimmelverkleidung (100) nach einem der Ansprüche 5 bis 6, **dadurch gekennzeichnet, dass** das Abdeckelement (28) aus einem Partikelschaum ausgebildet ist, und/oder
**dadurch gekennzeichnet, dass** das Abdeckelement (28) ein Folienkörper ist.

8. Dachhimmelverkleidung (100) nach einem der Ansprüche 1 bis 7, **dadurch gekennzeichnet, dass** an einer die mindestens eine Luftaustrittsöffnung (14) begrenzenden Wandung (36) ein Rahmenelement (35) angeordnet ist,
wobei optional das Rahmenelement (35) mit einem Partikelschaum (37) hinterschäumt ist und stoffschlüssig mit dem Grundkörper (11) verbunden ist.

9. Dachhimmelverkleidung (100) nach einem der Ansprüche 1 bis 8, **dadurch gekennzeichnet, dass** eine den mindestens einen Luftkanal (12) begrenzende Wandung (40) zumindest bereichsweise eckig oder rund ausgebildet ist,
wobei optional zumindest ein Teil der den mindestens einen Luftkanal (12) begrenzenden Wandung (40) durch das Abdeckelement (28) ausgebildet ist.

10. Dachhimmelverkleidung (100) nach einem der Ansprüche 1 bis 9, **dadurch gekennzeichnet, dass** an einer Querseite (17) des Grundkörpers (11) mindestens eine mit dem mindestens einen Luftkanal (12) verbundene Mündungsöffnung (15) ausgebildet ist, über welche ein Luftstrom (13) hin zu einer Scheibe (18) des Kraftfahrzeugs (200) führbar ist,
wobei optional die mindestens eine Mündungsöffnung (15) einen Querschnitt aufweist, welcher sich in Richtung der Scheibe (18) vergrößert.

11. Dachhimmelverkleidung (100) nach Anspruch 10, **dadurch gekennzeichnet, dass** in der mindestens einen Mündungsöffnung (15) mindestens zwei Leitelemente (38) angeordnet sind.

12. Dachhimmelverkleidung (100) nach einem der Ansprüche 1 bis 11, **dadurch gekennzeichnet, dass** der Grundkörper (11) und/oder die luftdurchlässige Materialschicht (22) und/oder das Abdeckelement (28) aus einem gleichen Partikelschaummaterial ausgebildet sind, und/oder **dadurch gekennzeichnet, dass** der Grundkörper (11) mindestens eine Kabelführung (41) und/oder mindestens eine Kabelklemmung (43) ausbildet.

13. Verfahren zur Herstellung einer Dachhimmelverkleidung (100) für ein Kraftfahrzeug (200) gemäß einem der Ansprüche 1-12, bei welchem ein Grundkörper (11) aus einem Partikelschaum ausgebildet wird, wobei während eines Ausschäumens des Partikelschaums des Grundkörpers (11) mindestens ein Luftkanal (12) in dem Grundkörper (11) zur Führung eines Luftstroms (13) durch den Grundkörper (11) ausgebildet wird und wobei während des Ausschäumens des Partikelschaums des Grundkörpers (11) mindestens eine Luftaustrittsöffnung (14) in dem Grundkörper (11) ausgebildet wird, über welche der in dem Luftkanal (12) geführte Luftstrom (13) in einen Innenraum (16) des Kraftfahrzeugs (200) einströmen kann.

14. Verfahren nach Anspruch 13
, **dadurch gekennzeichnet, dass**
die Luftaustrittsöffnung (14) mittels einer luftdurchlässigen Materialschicht (22) verschlossen wird, wobei die luftdurchlässige Materialschicht (22) an einer in Richtung Innenraum (16) des Kraftfahrzeugs (200) gerichteten Seitenfläche (21) des Grundkörpers (11) angeordnet wird.

15. Verfahren nach Anspruch 13 oder 14,
**dadurch gekennzeichnet, dass** zur Erhöhung einer Luftdurchtrittsmenge durch die luftdurchlässige Materialschicht (22) die luftdurchlässige Materialschicht (22) im Bereich der mindestens einen Luftaustrittsöffnung (14) mittels eines Werkzeugs (25) bearbeitet wird, und/der
**dadurch gekennzeichnet, dass** während des Ausschäumens des Partikelschaums des Grundkörpers (11) an einer Querseite (17) des Grundkörpers (11) mindestens eine mit dem mindestens einen Luftkanal (12) verbundene Mündungsöffnung (15) ausgebildet wird, über welche ein Luftstrom (13) hin zu einer Scheibe (18) des Kraftfahrzeugs (200) geführt werden kann.

## Claims

1. Headliner trim (100) for a motor vehicle (200), comprising a planar main body (11) which is designed to extend over the entire width and length of the headliner,
at least one air channel (12) formed in the main body (11) for conducting an air flow (13) through the main body (11), and
at least one air outlet opening (14) formed in the main body (11), through which air outlet opening the air flow (13) conducted in the air channel (12) can flow into an interior (16) of the motor vehicle (200), wherein the entire main body (11) is formed from a particle foam and not a multilayer composite.

2. Headliner trim (100) according to claim 1, **characterized in that** the at least one air outlet opening (14) is closed by means of an air-permeable material layer (22), wherein the air-permeable material layer (22) is arranged on a side surface (21) of the main body (11) that faces the interior (16) of the motor vehicle (200) wherein optionally, in order to fasten the air-permeable material layer (22) to the side surface (21) of the main body (11), the air-permeable material layer (22) is back-foamed with the particle foam of the main body (11).

3. Headliner trim (100) according to claim 2, **characterized in that** an adhesion promoter is arranged between the main body (11) and the air-permeable material layer (22).

4. Headliner trim (100) according to any of claims 2 to 3, **characterized in that** the air-permeable material layer (22) is formed from a decorative material.

5. Headliner trim (100) according to any of claims 1 to 4, **characterized in that** a cover element (28) is arranged on a side surface (27) of the main body (11) that faces away from the interior (16) of the motor vehicle (200), wherein the cover element (28) is optionally fastened to the main body (11) by an integral bond and/or in a force-locking and/or form-fitting manner.

6. Headliner trim (100) according to claim 5, **characterized in that** the cover element (28) is fastened to the main body (11) by means of a welded connection (29), and/or **characterized in that** the cover element (28) is fastened to the main body (11) by means of a latching connection (33) .

7. Headliner trim (100) according to any of claims 5 to 6, **characterized in that** the cover element (28) is formed from a particle foam, and/or **characterized in that** the cover element (28) is a film body.

8. Headliner trim (100) according to any of claims 1 to 7, **characterized in that** a frame element (35) is arranged on a wall (36) delimiting the at least one air outlet opening (14), wherein the frame element (35) is optionally back-foamed with a particle foam (37) and is integrally bonded to the main body (11).

9. Headliner trim (100) according to any of claims 1 to 8, **characterized in that** a wall (40) delimiting the at least one air channel (12) is at least partially angular or round, wherein optionally at least part of the wall (40) delimiting the at least one air channel (12) is formed by the cover element (28).

10. Headliner trim (100) according to any of claims 1 to 9, **characterized in that** at least one opening (15) which is connected to the at least one air channel (12) and via which an air flow (13) can be conducted to a window pane (18) of the motor vehicle (200) is formed on a transverse side (17) of the main body (11), wherein optionally the at least one opening (15) has a cross section which increases in the direction of the window pane (18).

11. Headliner trim (100) according to claim 10, **characterized in that** at least two guide elements (38) are arranged in the at least one opening (15).

12. Headliner trim (100) according to any of claims 1 to 11, **characterized in that** the main body (11) and/or the air-permeable material layer (22) and/or the cover element (28) are formed from the same particle foam material, and/or **characterized in that** the main body (11) forms at least one cable guide (41) and/or at least one cable clamp (43) .

13. Method for producing a headliner trim (100) for a motor vehicle (200) according to any of claims 1 to 12 in which a main body (11) is formed from a particle foam, wherein, when the particle foam of the main body (11) is foamed, at least one air channel (12) is formed in the main body (11) for conducting an air flow (13) through the main body (11) and wherein, when the particle foam of the main body (11) is foamed, at least one air outlet opening (14) is formed in the main body (11), through which air outlet opening the air flow (13) conducted in the air channel (12) can flow into an interior (16) of the motor vehicle (200).

14. Method according to claim 13, **characterized in that** the air outlet opening (14) is closed by means of an air-permeable material layer (22), wherein the air-permeable material layer (22) is arranged on a side surface (21) of the main body (11) that faces the interior (16) of the motor vehicle (200).

15. Method according to claim 13 or 14, **characterized in that** the air-permeable material layer (22) is machined by means of a tool (25) in the region of the at least one air outlet opening (14) to increase the amount of air that passes through the air-permeable material layer (22), and/or **characterized in that**, during the foaming of the particle foam of the main body (11), at least one opening (15) which is connected to the at least one air channel (12) and via which an air flow (13) can be conducted to a window pane (18) of the motor vehicle (200) is formed on a transverse side (17) of the main body (11).

## Revendications

1. Revêtement d'habillage de plafond (100) pour un véhicule à moteur (200), comportant
un corps de base (11) en forme de plaque, lequel est conçu de manière à s'étendre sur toute la largeur et toute la longueur d'un revêtement d'habillage de plafond,
au moins un conduit d'air (12), formé dans le corps de base (11), destiné au guidage d'un flux d'air (13) à travers le corps de base (11), et
au moins une ouverture de sortie d'air (14), formée dans le corps de base (11), à travers laquelle le flux d'air (13) guidé dans le conduit d'air (12) peut s'écouler dans un habitacle (16) du véhicule à moteur (200),
dans lequel l'ensemble du corps de base (11) est formé à partir d'une mousse particulaire et non d'un composite multicouche.

2. Revêtement d'habillage de plafond (100) selon la revendication 1, **caractérisé en ce que** l'au moins une ouverture de sortie d'air (14) est fermée au moyen d'une couche de matériau (22) perméable à l'air, dans lequel la couche de matériau (22) perméable à l'air est disposée sur une surface latérale (21) du corps de base (11) dirigée dans la direction de l'habitacle (16) du véhicule à moteur (200),
dans lequel éventuellement, pour la fixation de la couche de matériau (22) perméable à l'air à la surface latérale (21) du corps de base (11), la couche de matériau (22) perméable à l'air est surmoulée par moussage à l'aide de la mousse particulaire du corps de base (11).

3. Revêtement d'habillage de plafond (100) selon la revendication 2, **caractérisé en ce qu'**un promoteur d'adhérence est disposé entre le corps de base (11) et la couche de matériau (22) perméable à l'air.

4. Revêtement d'habillage de plafond (100) selon l'une quelconque des revendications 2 à 3, **caractérisé en ce que** la couche de matériau (22) perméable à l'air est formée à partir d'un matériau décoratif.

5. Revêtement d'habillage de plafond (100) selon l'une quelconque des revendications 1 à 4, **caractérisé en ce qu'**un élément de recouvrement (28) est disposé sur une surface latérale (27) du corps de base (11) orientée à l'opposé de l'habitacle (16) du véhicule à moteur (200),
dans lequel éventuellement l'élément de recouvrement (28) est fixé au corps de base (11) par liaison de complémentarité de matière et/ou de complémentarité de force et/ou de complémentarité de forme.

6. Revêtement d'habillage de plafond (100) selon la revendication 5, **caractérisé en ce que** l'élément de recouvrement (28) est fixé au corps de base (11) au moyen d'une liaison par soudure (29), et/ou
**caractérisé en ce que** l'élément de recouvrement (28) est fixé au corps de base (11) au moyen d'une liaison par encliquetage (33).

7. Revêtement d'habillage de plafond (100) selon l'une des revendications 5 à 6, **caractérisé en ce que** l'élément de recouvrement (28) est formé à partir d'une mousse particulaire, et/ou
**caractérisé en ce que** l'élément de recouvrement (28) est un corps de film.

8. Revêtement d'habillage de plafond (100) selon l'une quelconque des revendications 1 à 7, **caractérisé en ce qu'**un élément de cadre (35) est disposé sur une paroi (36) délimitant l'au moins une ouverture de sortie d'air (14),
dans lequel éventuellement l'élément de cadre (35) est surmoulé par moussage à l'aide d'une mousse particulaire (37) et est relié au corps de base (11) par liaison de complémentarité de matière.

9. Revêtement d'habillage de plafond (100) selon l'une quelconque des revendications 1 à 8, **caractérisé en ce qu'**une paroi (40) délimitant l'au moins un conduit d'air (12) est anguleuse ou ronde, au moins par zones,
dans lequel éventuellement au moins une partie de la paroi (40) délimitant l'au moins un conduit d'air (12) est formée par l'élément de recouvrement (28).

10. Revêtement d'habillage de plafond (100) selon l'une quelconque des revendications 1 à 9, **caractérisé en ce qu'**au moins une ouverture d'embouchure (15) reliée à l'au moins un conduit d'air (12) est formée sur un côté transversal (17) du corps de base (11), par l'intermédiaire de laquelle un flux d'air (13) peut être guidé vers une vitre (18) du véhicule à moteur (200),
dans lequel éventuellement l'au moins une ouverture d'embouchure (15) comporte une section transversale, laquelle s'agrandie dans la direction de la vitre (18).

11. Revêtement d'habillage de plafond (100) selon la revendication 10, **caractérisé en ce qu'**au moins deux éléments de guidage (38) sont disposés dans l'au moins une ouverture d'embouchure (15).

12. Revêtement d'habillage de plafond (100) selon l'une quelconque des revendications 1 à 11, **caractérisé en ce que** le corps de base (11) et/ou la couche de matériau (22) perméable à l'air et/ou l'élément de recouvrement (28) sont formés à partir d'un même matériau en mousse particulaire et/ou
**caractérisé en ce que** le corps de base (11) forme au moins un guide-câble (41) et/ou au moins un serre-câble (43).

13. Procédé de fabrication d'un revêtement d'habillage de plafond (100) pour un véhicule à moteur (200) selon l'une quelconque des revendications 1 à 12, dans lequel un corps de base (11) est formé à partir d'une mousse particulaire, dans lequel l'au moins un conduit d'air (12) est formé dans le corps de base (11) pour guider un flux d'air (13) à travers le corps de base (11) lors du moussage de la mousse particulaire du corps de base (11), et dans lequel l'au moins une ouverture de sortie d'air (14) est formée dans le corps de base (11) lors du moussage de la mousse particulaire du corps de base (11), par l'intermédiaire de laquelle le flux d'air (13) guidé dans le conduit d'air (12) peut s'écouler dans un habitacle (16) du véhicule à moteur (200).

14. Procédé selon la revendication 13, **caractérisé en ce que**
l'ouverture de sortie d'air (14) est fermée au moyen d'une couche de matériau (22) perméable à l'air, dans lequel la couche de matériau (22) perméable à l'air est disposée sur une surface latérale (21) du corps de base (11) orientée dans la direction de l'habitacle (16) du véhicule à moteur (200).

15. Procédé selon la revendication 13 ou 14, **caractérisé en ce que**, pour augmenter une quantité d'air traversant la couche de matériau (22) perméable à l'air, la couche de matériau (22) perméable à l'air est traitée dans la zone de l'au moins une ouverture de sortie d'air (14) à l'aide d'un outil (25) et/ou
**caractérisé en ce que**, lors du moussage de la mousse particulaire du corps de base (11), l'au moins une ouverture d'embouchure (15) reliée à l'au moins un conduit d'air (12) est formée sur le côté transversal (17) du corps de base (11), par l'intermédiaire de laquelle un flux d'air (13) peut être guidé vers la vitre (18) du véhicule à moteur (200).
